# EUROPEAN PATENT SPECIFICATION

(11) **EP 2 927 429 B1**
(45) Date of publication and mention of the grant of the patent: **04.07.2018**
(21) Application number: 15162138.0
(22) Date of filing: 01.04.2015
(51) Int. Cl.: F01D 5/18, F01D 9/02

(54) **GAS TURBINE ENGINE COMPONENT WITH FLOW SEPARATING RIB**
GASTURBINENKOMPONENTE MIT FLUSSTRENNUNGSRIPPE
COMPOSANT DE MOTEUR À TURBINE À GAZ AVEC NERVURE DE SÉPARATION DE FLUX

(30) Priority: 04.04.2014 US 201461975198 P
(43) Date of publication of application: 07.10.2015
(73) Proprietor: United Technologies Corporation, Farmington, CT 06032 (US)
(72) Inventor: SPANGLER, Brandon W., Vernon, CT 06066 (US); CAVALLO, Gina, Watertown, CT 06795 (US)
(74) Representative: Dehns

(56) References cited:
- EP-A1- 1 626 162
- GB-A- 2 405 451
- US-A- 4 798 515
- US-B1- 8 628 298

## Description

### BACKGROUND

This disclosure relates to a gas turbine engine, and more particularly to a gas turbine engine component having an internal cooling circuit. The internal cooling circuit may include a cooling cavity and a rib that separates the cooling cavity into separate portions.

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Because they are commonly exposed to hot combustion gases, many gas turbine engine components employ internal cooling circuits that channel a dedicated cooling fluid for cooling regions of the component. Thermal energy is transferred from the component to the cooling fluid to cool the component.

EP 1 626 162 A1, GB 2 405 451 A and US 4 798 515 disclose a component in accordance with the precharacterising portion of claim 1.

### SUMMARY

According to the invention, there is provided a vane assembly as set forth in claim 1.

In a non-limiting embodiment of the foregoing vane assembly, the wall circumscribes the cooling cavity.

In a further non-limiting embodiment of any of the foregoing vane assemblies, the first portion of the cooling cavity is fed with a first cooling fluid and the second portion of the cooling cavity is fed with a second, different cooling fluid.

In a further non-limiting embodiment of any of the foregoing vane assemblies, the first portion is an outer diameter portion and the second portion is an inner diameter portion of the cooling cavity.

In a further non-limiting embodiment of any of the foregoing vane assemblies, the first portion is circumferentially offset from the second portion.

In a further non-limiting embodiment of any of the foregoing vane assemblies, the rib extends in an axial direction inside of the cooling cavity.

According to the present invention, there is further provided a gas turbine engine as set forth in claim 7.

In a non-limiting embodiment of the foregoing gas turbine engine, the cooling circuit is disposed inside an airfoil of the vane assembly.

In a further non-limiting embodiment of any of the foregoing gas turbine engines, the cooling circuit is disposed inside of a body of the vane assembly.

In a further non-limiting embodiment of any of the foregoing gas turbine engines, the cooling circuit includes a plurality of openings that expel the cooling fluid from both the first portion and the second portion.

According to the present invention, there is further provided a method as set forth in claim 10.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 illustrates a schematic, cross-sectional view of a gas turbine engine.
Figure 2 illustrates a gas turbine engine component according to a first embodiment of this disclosure.
Figure 3 illustrates a cross-sectional view through Section A-A of Figure 2.
Figure 4 illustrates a flow separating rib of a gas turbine engine component cooling circuit.
Figure 5 illustrates a gas turbine engine component which falls outside the scope of the claims.
Figure 6 illustrates another flow separating rib.

### DETAILED DESCRIPTION

This disclosure relates to a gas turbine engine component that includes an internal cooling circuit. The cooling circuit employs one or more cooling cavities disposed inside of the component. A flow separating rib is positioned to divide the cooling cavity into at least two portions. The cooling cavity may be fed with separate cooling fluids at opposite sides of the cavity. These opposite fluid flows are fluidly isolated between the first portion and the second portion by the rib in order to maintain a constant fluid flow within each portion even where pressure differentials may exist between the opposite sides. A more evenly cooled part is achieved by maintaining constant fluid flows within each portion of the cooling cavity. These and other features are discussed in greater detail herein.

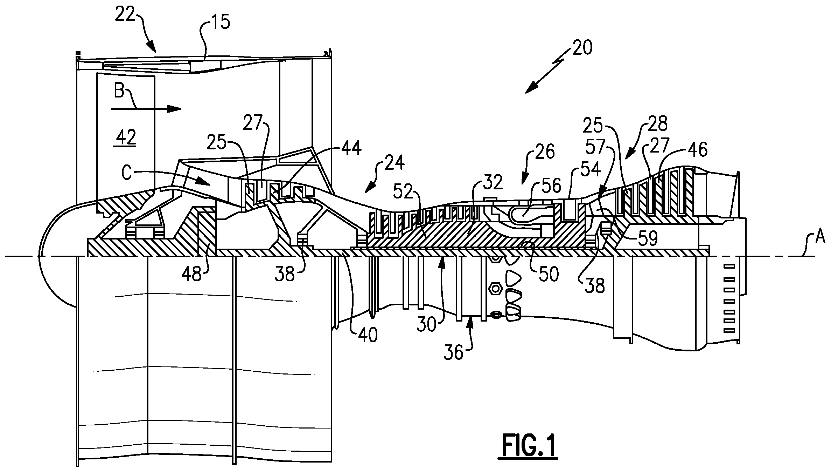

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of the bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via the bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The gear system 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans and turboshafts.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1,150 ft/second (350.5 meters/second).

Each of the compressor section 24 and the turbine section 28 may include alternating rows of rotor assemblies and vane assemblies (shown schematically). For example, the rotor assemblies can carry a plurality of rotating blades 25, while each vane assembly can carry a plurality of vanes 27 that extend into the core flow path C. The blades 25 may either create or extract energy in the form of pressure from the core airflow as it is communicated along the core flow path C. The vanes 27 direct the core airflow to the blades 25 to either add or extract energy.

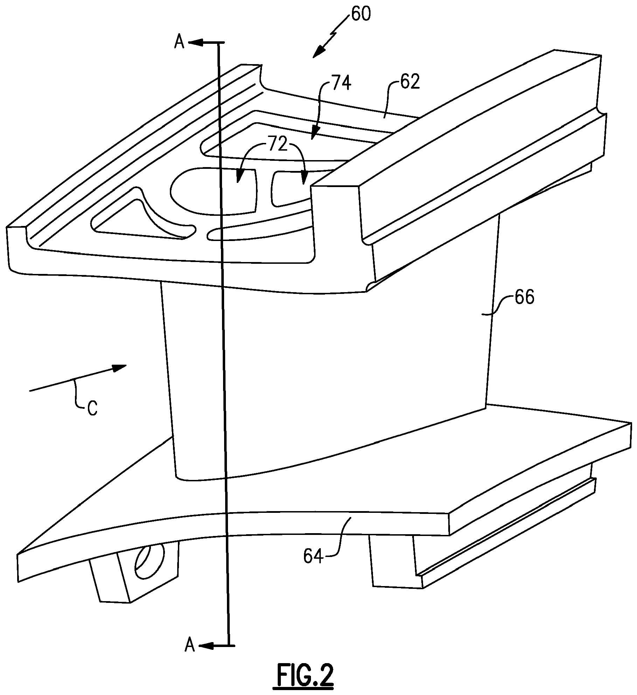

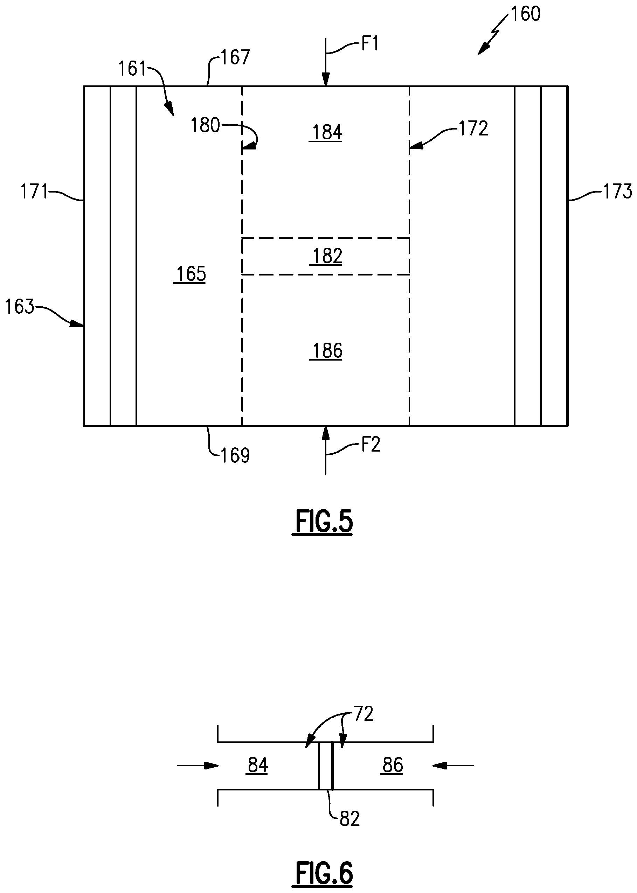

Figure 2 illustrates a component 60 that can be incorporated into a gas turbine engine, such as the gas turbine engine 20 of Figure 1. In this non-limiting embodiment, the component 60 is represented as a turbine vane. However, the teachings of this disclosure are not limited to turbine vanes and could extend to other components of a gas turbine engine, including but not limited to, other vanes, blades, blade outer air seals (BOAS) (see, for example, the BOAS illustrated in Figure 5), or other components.

In one embodiment, the component 60 includes an outer platform 62, an inner platform 64, and an airfoil 66 that extends between the outer platform 62 and the inner platform 64. The outer platform 62 connects the component 60 to an engine casing (not shown) and the inner platform 64 affixes a radially inboard portion of the component 60 to securely position the component 60 within the core flow path C.

The component 60 can include one or more internal cooling cavities 72 that are disposed inside of the component 60. In one embodiment, the cooling cavities 72 extend inside of the airfoil 66 of the component 60. In another embodiment, one or more cooling cavities may extend inside a body or platform portion of the component, such as in components that do not have an airfoil (e.g., a BOAS, liner, panel, etc.).

The internal cooling cavities 72 define a cooling circuit 74 for cooling the component 60. The illustrated cooling circuit 74 represents but one non-limiting example of many potential cooling circuits. In other words, the component 60 could be manufactured to include various alternatively shaped and sized cooling passages as part of an internal circuitry within the scope of this disclosure.

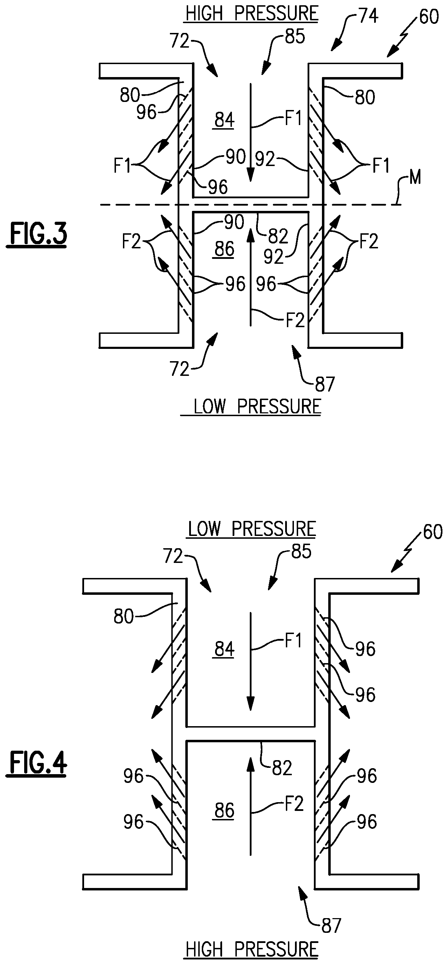

Figure 3 illustrates a portion of the cooling circuit 74 described in Figure 2. In this embodiment, a cross-section through a cooling cavity 72 is depicted. The cooling cavity 72 is generally surrounded or circumscribed by a wall 80. Opposing sides 90, 92 of the wall 80 define flow boundaries of the cooling cavity 72. The wall 80 may embody any of a variety of sizes and shapes within the scope of this disclosure.

A rib 82 may axially extend inside of the cooling cavity 72 to separate the cooling cavity 72 into a first portion 84 and a second portion 86. In one embodiment, the first portion 84 is an outer diameter portion of the cooling cavity 72 and the second portion 86 is an inner diameter portion. However, other configurations are also contemplated as being within the scope of this disclosure, including but not limited to circumferentially spaced portions (see, e.g., Figure 5) and axially spaced portions (see, e.g., Figure 6).

The rib 82 extends between the opposing sides 90, 92 of the wall 80 to completely seal and separate the first portion 84 of the cooling cavity 72 from the second portion 86 of the cooling cavity 72. Said another way, the rib 82 is a solid flow separator that fluidly isolates the first portion 84 from the second portion 86 of the cooling cavity 72.

The rib 82 may be positioned at a mid-span M of the cooling cavity 72. The actual location of the rib 82 could vary part-by-part and may depend on pressure differentials that exist between the first portion 84 and the second portion 86 of the cooling cavity 72, among other factors.

In one embodiment, the cooling cavity 72 is a dual-fed cavity that is fed with a cooling fluid at both of its opposite sides (i.e., fed from two distinct locations). In one embodiment, the cooling cavity 72 is fed from distinct coolant sources that communicate coolant from different locations. For example, the first portion 84 of the cooling cavity 72 may be fed with a first cooling fluid F1, such as a first bleed airflow, and the second portion 86 of the cooling cavity 72 may be fed with a second cooling fluid F2, such as a second bleed airflow. In other words, the cooling fluids F1 and F2 may be separate from one another.

In the embodiment illustrated in Figure 3, an inlet 85 of the first portion 84 of the cooling cavity 72 is positioned in a relatively high pressure area and an inlet 87 of the second portion 86 of the cooling cavity 72 is positioned at a relatively low pressure area. Of course, an opposite configuration is also possible in which the inlet 85 of the first portion 84 is located at a relatively low pressure area and the inlet 87 of the second portion 86 is within a relatively high pressure area (see Figure 4). Despite the pressure differentials that may exist at the inlets 85, 87, flow of the first and second cooling fluids F1, F2 remains constant within both the first portion 84 and the second portion 86 because these portions are sealed from one another by the rib 82. Maintaining consistent flow in this manner results in relatively consistent Mach numbers, pressure losses, heat transfer and metal temperatures throughout the cooling cavity 72. In other words, the component 60 is more evenly cooled by virtue of the flow separating rib 82.

A plurality of openings 96 may extend through portions of the wall 80 associated with both the first portion 84 and the second portion 86 of the cooling cavity 72. The cooling fluids F1, F2 that are circulated in the first and second portions 84, 86, respectively, may be expelled through the openings 96. In one embodiment, the openings 96 are film cooling holes. In another embodiment, the openings 96 are slots. Any type of opening may extend through the wall 80 for expelling the cooling fluids F1, F2 from the cooling cavity 72.

Figure 5 illustrates another component 160 that can be incorporated into a gas turbine engine, which does not fall within the scope of the claims. In this disclosure, like reference numbers designate like elements where appropriate and reference numerals with the addition of 100 or multiples thereof designate modified elements that are understood to incorporate the same features and benefits of the corresponding original elements.

The component 160 is represented as a BOAS. The component 160 includes a body 161 having a radially inner face 163 and a radially outer face 165. The radially inner face 163 and the radially outer face 165 extend circumferentially between a first mate face 167 and a second mate face 169 and extend axially between a leading edge 171 and a trailing edge 173.

A cooling cavity 172 may be disposed inside the body 161. The cooling cavity 172 of this embodiment circumferentially extends between the first mate face 167 and the second mate face 169. A wall 180 may extend about the cooling cavity 172. The cooling cavity 172 is divided into a first portion 184 and a second portion 186 by a rib 182. The rib 182 fluidly isolates the first portion 184 from the second portion 186.

The first portion 184 of the cooling cavity 172 may be fed with a first cooling fluid F1 at a location adjacent to the first mate face 167 and the second portion 186 may be fed with a second cooling fluid F2 at a location adjacent to the second mate face 169. The rib 182 is adapted to maintain these split flows at relatively constant flow levels despite potential pressure differentials that may exist between the first mate face 167 and the second mate face 169.

Although the different non-limiting embodiments are illustrated as having specific components, the embodiments of this disclosure are not limited to those particular combinations. It is possible to use some of the components or features from any of the non-limiting embodiments in combination with features or components from any of the other non-limiting embodiments.

It should be understood that like reference numerals identify corresponding or similar elements throughout the several drawings. It should also be understood that although a particular component arrangement is disclosed and illustrated in these exemplary embodiments, other arrangements could also benefit from the teachings of this disclosure.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A vane assembly (60), comprising:
a wall (80) that extends about a cooling cavity (72), wherein said cooling cavity (72) is a dual-fed cavity that is fed from at least two different locations;
**characterized in that**:
a rib (82) connects between opposing sides of said wall to separate said cooling cavity (72) into a first portion (84) and a second portion (86) that is fluidly isolated from said first portion (84);
a plurality of openings (96) through portions of said wall (80) are associated with both said first portion (84) and said second portion (86); and
said plurality of openings (96) are film cooling holes or slots.

2. The vane assembly as recited in claim 1, wherein said wall (80) circumscribes said cooling cavity (72).

3. The vane assembly as recited in any preceding claim, wherein first portion (84) of said cooling cavity (72) is fed with a first cooling fluid (F1) and said second portion (86) of said cooling cavity (72) is fed with a second, different cooling fluid (F2).

4. The vane assembly as recited in any preceding claim, wherein said first portion (84) is an outer diameter portion and said second portion (86) is an inner diameter portion of said cooling cavity (72).

5. The vane assembly as recited in any preceding claim, wherein said first portion (84) is circumferentially offset from said second portion (86).

6. The vane assembly as recited in any preceding claim, wherein said rib (82) extends in an axial direction inside of said cooling cavity (72).

7. A gas turbine engine, comprising:
a vane assembly (60) that defines a cooling circuit (74) configured to cool said vane assembly (60) with a cooling fluid, said cooling circuit including a cooling cavity (72) disposed inside of said vane assembly (60);
**characterized in that**:
an axial rib (82) connects between opposing sides of a wall (80) that extends about said cooling cavity (72) to divide said cooling cavity (72) into a first portion (84) and a second portion (86) that is separate from and fluidly isolated from said first portion (84);
a plurality of openings (96) through portions of said wall (80) are associated with both said first portion (84) and said second portion (86); and
said plurality of openings (96) are film cooling holes or slots.

8. The gas turbine engine as recited in claim 7, wherein said cooling circuit (72) is disposed inside an airfoil or inside of a body of said vane assembly (60).

9. The gas turbine engine as recited in claim 7 or 8, wherein said cooling circuit (74) includes a plurality of openings (96) that expel said cooling fluid from both said first portion (84) and said second portion (86).

10. A method of cooling a gas turbine engine component (60), **characterized in that** the method comprises:
dividing a cooling cavity (74) disposed inside the gas turbine engine component (60) into a first portion (84) and a second portion (86) with a rib (82) which connects between opposing sides of a wall (80) that extends about said cooling cavity (72), the first portion (84) being fluidly isolated from the second portion (86) by the rib, wherein a plurality of openings (96) through portions of said wall (80) are associated with both said first portion (84) and said second portion (86), and said plurality of openings (96) are film cooling holes or slots;
communicating a first cooling fluid (F1) from a first location into the first portion (84); and
communicating a second cooling fluid (F2) from a second location into the second portion (86).

11. The method as recited in claim 10, comprising expelling the first and second cooling fluids (F1,F2) from the cooling cavity (72) through a plurality of openings (96).

12. The method as recited in claim 10 or 11, wherein the second cooling fluid (F2) is separate from the first cooling fluid (F1).

13. The method as recited in claim 10, 11 or 12, wherein one of the first portion (84) and the second portion (86) of the cooling cavity (72) is positioned in a high pressure area and the other of the first portion (84) and the second portions (86) is positioned in a low pressure area.

## Patentansprüche

1. Schaufelanordnung (60), umfassend:
eine Wand (80), die sich um einen Kühlhohlraum (72) herum erstreckt, wobei der Kühlhohlraum (72) ein doppelt versorgter Hohlraum ist, der von mindestens zwei verschiedenen Standorten versorgt wird;
**dadurch gekennzeichnet, dass**:
eine Rippe (82) gegenüberliegende Seiten der Wand verbindet, um den Kühlhohlraum (72) in einen ersten Abschnitt (84) und einen zweiten Abschnitt (86), der fluidisch von dem ersten Abschnitt (84) isoliert ist, zu teilen;
eine Vielzahl von Öffnungen (96) durch Abschnitte der Wand (80) sowohl dem ersten Abschnitt (84) als auch dem zweiten Abschnitt (86) zugeordnet ist; und
die Vielzahl von Öffnungen (96) Filmkühllöcher oder -schlitze sind.

2. Schaufelanordnung nach Anspruch 1, wobei die Wand (80) den Kühlhohlraum (72) umgrenzt.

3. Schaufelanordnung nach einem vorhergehenden Anspruch, wobei der erste Abschnitt (84) des Kühlhohlraums (72) mit einem ersten Kühlfluid (F1) versorgt wird und der zweite Abschnitt (86) des Kühlhohlraums (72) mit einem zweiten, anderen Kühlfluid (F2) versorgt wird.

4. Schaufelanordnung nach einem vorhergehenden Anspruch, wobei der erste Abschnitt (84) ein Außendurchmesserabschnitt ist und der zweite Abschnitt (86) ein Innendurchmesserabschnitt des Kühlhohlraums (72) ist.

5. Schaufelanordnung nach einem vorhergehenden Anspruch, wobei der erste Abschnitt (84) umlaufend von dem zweiten Abschnitt (86) versetzt ist.

6. Schaufelanordnung nach einem vorhergehenden Anspruch, wobei sich die Rippe (82) in eine axiale Richtung innerhalb des Kühlhohlraums (72) erstreckt.

7. Gasturbinenmotor, umfassend:
eine Schaufelanordnung (60), die einen Kühlkreislauf (74) definiert, der ausgelegt ist, um die Schaufelanordnung (60) mit einem Kühlfluid zu kühlen, wobei der Kühlkreislauf einen Kühlhohlraum (72) beinhaltet, der innerhalb der Schaufelanordnung (60) angeordnet ist;
**dadurch gekennzeichnet, dass**:
eine axiale Rippe (82) gegenüberliegende Seiten einer Wand (80) verbindet, die sich um den Kühlhohlraum (72) herum erstreckt, um den Kühlhohlraum (72) in einen ersten Abschnitt (84) und einen zweiten Abschnitt (86), der getrennt von und fluidisch von dem ersten Abschnitt (84) isoliert ist, zu teilen;
eine Vielzahl von Öffnungen (96) durch Abschnitte der Wand (80) sowohl dem ersten Abschnitt (84) als auch dem zweiten Abschnitt (86) zugeordnet ist; und
die Vielzahl von Öffnungen (96) Filmkühllöcher oder -schlitze sind.

8. Gasturbinenmotor nach Anspruch 7, wobei der Kühlkreislauf (72) innerhalb einer Tragfläche oder innerhalb eines Körpers der Schaufelanordnung (60) angeordnet ist.

9. Gasturbinenmotor nach Anspruch 7 oder 8, wobei der Kühlkreislauf (74) eine Vielzahl von Öffnungen (96) beinhaltet, die das Kühlfluid sowohl von dem ersten Abschnitt (84) als auch von dem zweiten Abschnitt (86) ausstoßen.

10. Verfahren zur Kühlung einer Gasturbinenmotorkomponente (60), **dadurch gekennzeichnet, dass** das Verfahren Folgendes umfasst:
Teilen eines innerhalb der Gasturbinenmotorkomponente (60) angeordneten Kühlhohlraums (74) in einen ersten Abschnitt (84) und einen zweiten Abschnitt (86), mit einer Rippe (82), die gegenüberliegende Seiten einer Wand (80) verbindet, die sich um den Kühlhohlraum (72) herum erstreckt, wobei der erste Abschnitt (84) durch die Rippe fluidisch von dem zweiten Abschnitt (86) isoliert ist, wobei eine Vielzahl von Öffnungen (96) durch Abschnitte der Wand (80) sowohl dem ersten Abschnitt (84) als auch dem zweiten Abschnitt (86) zugeordnet ist, und die Vielzahl von Öffnungen (96) Filmkühllöcher oder -schlitze sind;
Leiten eines ersten Kühlfluids (F1) von einem ersten Standort in den ersten Abschnitt (84); und
Leiten eines zweiten Kühlfluids (F2) von einem zweiten Standort in den zweiten Abschnitt (86).

11. Verfahren nach Anspruch 10, umfassend das Ausstoßen des ersten und zweiten Kühlfluids (F1, F2) aus dem Kühlhohlraum (72) durch eine Vielzahl von Öffnungen (96).

12. Verfahren nach Anspruch 10 oder 11, wobei das zweite Kühlfluid (F2) von dem ersten Kühlfluid (F1) getrennt ist.

13. Verfahren nach Anspruch 10, 11 oder 12, wobei einer von dem ersten Abschnitt (84) und dem zweiten Abschnitt (86) des Kühlhohlraums (72) in einem Hochdruckbereich positioniert ist und der andere von dem ersten Abschnitt (84) und dem zweiten Abschnitt (86) in einem Niederdruckbereich positioniert ist.

## Revendications

1. Ensemble d'aube (60), comprenant :
une paroi (80) qui s'étend autour d'une cavité de refroidissement (72), dans lequel ladite cavité de refroidissement (72) est une cavité à double alimentation qui est alimentée à partir d'au moins deux emplacements différents ;
**caractérisé en ce que** :
une nervure (82) relie des côtés opposés de ladite paroi pour séparer ladite cavité de refroidissement (72) en une première partie (84) et une seconde partie (86) qui est isolée de manière fluide de ladite première partie (84) ;
une pluralité d'ouvertures (96) à travers des parties de ladite paroi (80) sont associées avec à la fois ladite première partie (84) et ladite seconde partie (86) ; et
ladite pluralité d'ouvertures (96) sont des trous ou des fentes de refroidissement de film.

2. Ensemble d'aube selon la revendication 1, dans lequel ladite paroi (80) entoure ladite cavité de refroidissement (72).

3. Ensemble d'aube selon une quelconque revendication précédente, dans lequel la première partie (84) de ladite cavité de refroidissement (72) est alimentée par un premier fluide de refroidissement (F1) et ladite seconde partie (86) de ladite cavité de refroidissement (72) est alimentée par un second fluide de refroidissement différent (F2).

4. Ensemble d'aube selon une quelconque revendication précédente, dans lequel ladite première partie (84) est une partie de diamètre externe et ladite seconde partie (86) est une partie de diamètre interne de ladite cavité de refroidissement (72).

5. Ensemble d'aube selon une quelconque revendication précédente, dans lequel ladite première partie (84) est décalée circonférentiellement par rapport à ladite seconde partie (86).

6. Ensemble d'aube selon une quelconque revendication précédente, dans lequel ladite nervure (82) s'étend dans une direction axiale à l'intérieur de ladite cavité de refroidissement (72) .

7. Moteur à turbine à gaz, comprenant :
un ensemble d'aube (60) qui définit un circuit de refroidissement (74) conçu pour refroidir ledit ensemble d'aube (60) avec un fluide de refroidissement, ledit circuit de refroidissement comprenant une cavité de refroidissement (72) disposée à l'intérieur dudit ensemble d'aube (60) ;
**caractérisé en ce que** :
une nervure axiale (82) relie des côtés opposés d'une paroi (80) qui s'étend autour de ladite cavité de refroidissement (72) pour diviser ladite cavité de refroidissement (72) en une première partie (84) et une seconde partie (86) qui est séparée de ladite première partie (84) et isolée de manière fluide de celle-ci ;
une pluralité d'ouvertures (96) à travers des parties de ladite paroi (80) sont associées avec à la fois ladite première partie (84) et ladite seconde partie (86) ; et
ladite pluralité d'ouvertures (96) sont des trous ou des fentes de refroidissement de film.

8. Moteur à turbine à gaz selon la revendication 7, dans lequel ledit circuit de refroidissement (72) est disposé à l'intérieur d'un profil aérodynamique ou à l'intérieur d'un corps dudit ensemble d'aube (60).

9. Moteur à turbine à gaz selon la revendication 7 ou 8, dans lequel ledit circuit de refroidissement (74) comprend une pluralité d'ouvertures (96) qui expulsent ledit fluide de refroidissement à la fois de ladite première partie (84) et de ladite seconde partie (86).

10. Procédé de refroidissement d'un composant de moteur à turbine à gaz (60), **caractérisé en ce que** le procédé comprend :
la division d'une cavité de refroidissement (74) disposée à l'intérieur du composant de moteur à turbine à gaz (60) en une première partie (84) et une seconde partie (86) avec une nervure (82) qui relie des côtés opposés d'une paroi (80) qui s'étend autour de ladite cavité de refroidissement (72), la première partie (84) étant isolée de manière fluide de la seconde partie (86) par la nervure, dans lequel une pluralité d'ouvertures (96) à travers des parties de ladite paroi (80) sont associées avec à la fois ladite première partie (84) et ladite seconde partie (86), et ladite pluralité d'ouvertures (96) sont des trous ou des fentes de refroidissement de film ;
la communication d'un premier fluide de refroidissement (F1) à partir d'un premier emplacement dans la première partie (84) ; et
la communication d'un second fluide de refroidissement (F2) à partir d'un second emplacement dans la seconde partie (86).

11. Procédé selon la revendication 10, comprenant l'expulsion des premier et second fluides de refroidissement (F1, F2) de la cavité de refroidissement (72) à travers une pluralité d'ouvertures (96).

12. Procédé selon la revendication 10 ou 11, dans lequel le second fluide de refroidissement (F2) est séparé du premier fluide de refroidissement (F1).

13. Procédé selon la revendication 10, 11 ou 12, dans lequel l'une de la première partie (84) et de la seconde partie (86) de la cavité de refroidissement (72) est positionnée dans une zone haute pression et l'autre de la première partie (84) et de la seconde partie (86) est positionnée dans une zone basse pression.
